# EUROPEAN PATENT SPECIFICATION

(11) **EP 3 123 459 B1**
(45) Date of publication and mention of the grant of the patent: **06.06.2018**
(21) Application number: 15707373.5
(22) Date of filing: 03.03.2015
(51) Int. Cl.: H04W 4/02

(54) **METHOD AND APPARATUS FOR IDENTIFYING PARKING SPACES FOR A GROUP OF VEHICLES**
VERFAHREN UND VORRICHTUNG ZUR IDENTIFIZIERUNG VON PARKPLÄTZE FÜR EINE GRUPPE VON FAHRZEUGEN
PROCÉDÉ ET APPAREIL POUR IDENTIFIER DES PLACES DE STATIONNEMENT POUR UN GROUPE DE VÉHICULES

(30) Priority: 26.03.2014 FI 20145279
(43) Date of publication of application: 01.02.2017
(73) Proprietor: HERE Global B.V., 5611 ZT Eindhoven (NL)
(72) Inventor: BEAUREPAIRE, Jerome, 10715 Berlin (DE); TUUKKANEN, Marko, 14913 Schlenzer (DE)
(74) Representative: Cohausz & Florack
(86) International application number: PCT/EP2015/054333
(87) International publication number: WO 2015/144396

(56) References cited:
- EP-A1- 1 434 032
- EP-A1- 2 767 962
- EP-A2- 1 308 694
- WO-A1-2013/152783
- @2014 Veer Parking: "The easiest way to find the closest and cheapest parking spot", , 8 November 2014 (2014-11-08), pages 1-7, XP002739229, Retrieved from the Internet: URL:http://veerapp.com/ [retrieved on 2015-05-05]

## Description

### BACKGROUND

Service providers and device manufacturers (e.g., wireless, cellular, etc.) are continually challenged to deliver value and convenience to consumers by, for example, providing compelling network services. One area of interest has been the development of location-based services and navigation systems for improving the driving experience. By way of example, many people employ mobile devices or in-vehicle navigation systems that are equipped with global positioning sensors and navigation and/or mapping applications for accessing navigation instructions, point of interest information or the like. Similarly, autonomous vehicles may be equipped with embedded navigation systems that also employ various location based services and navigation tools for supporting driving. Unfortunately, these applications and systems are limited in their ability to assist a group of vehicles travelling to a common destination identify parking spaces to accommodate each of the group members. Moreover, there is currently no convenient means of enabling the drivers to synchronize their efforts to identify parking based on the preferences of the group.

### SOME EXAMPLE EMBODIMENTS

Therefore, there is a need for an approach for identifying and coordinating parking spaces for a group of vehicles travelling to a common destination.

According to one embodiment, of the invention a method comprises determining parking criteria information associated with at least one vehicle group comprising a plurality of vehicles, wherein the at least one vehicle group is associated with at least one common navigation destination. The method further comprises processing and/or facilitating a processing of the parking criteria information to determine at least one set of a plurality of available parking spaces available at the at least one common navigation destination. The parking criteria information includes, at least one of (i) a proximity of the plurality of available
parking spaces to each other, and (ii) a proximity of the at least one set to the at least one navigation destination.

According to another embodiment, of the invention an apparatus comprises at least one processor, and at least one memory including computer program code for one or more computer programs, the at least one memory and the computer program code configured to, with the at least one processor, cause the apparatus to perform at least the following, determine parking criteria information associated with at least one vehicle group comprising a plurality of vehicles, wherein the at least one vehicle group is associated with at least one common navigation destination; and processing and/or facilitating a processing of the parking criteria information to determine at least one set of a plurality of available parking spaces available at the at least one common navigation destination, wherein the parking criteria information includes at least one of (i) a proximity of the plurality of available parking spaces to each other, and (ii) a proximity of the at least one set of the plurality of available parking spaces to the at least one navigation destination.

According to another embodiment, a computer-readable storage medium carries one or more sequences of one or more instructions which, when executed by one or more processors, cause, at least in part, an apparatus to perform at least the following, determine parking criteria information associated with at least one vehicle group comprising a plurality of vehicles, wherein the at least one vehicle group is associated with at least one common navigation destination; and processing and/or facilitating a processing of the
parking criteria information to determine at least one set of a plurality of available parking spaces available at the at least one common navigation destination, wherein the parking criteria information includes at least one of (i) a proximity of the plurality of available parking spaces to each other, and (ii) a proximity of the at least one set of the plurality of available parking spaces to the at least one navigation destination..

In addition, for various example embodiments of the invention, the following is applicable: a method comprising facilitating a processing of and/or processing (1) data and/or (2) information and/or (3) at least one signal, the (1) data and/or (2) information and/or (3) at least one signal based, at least in part, an (or derived at least in part from) any one or any combination of methods (or processes) disclosed in this application as relevant to any embodiment of the invention.

For various example embodiments of the invention, the following is also applicable: a method comprising facilitating access to at least one interface configured to allow access to at least one service, the at least one service configured to perform any one or any combination of network or service provider methods (or processes) disclosed in this application.

For various example embodiments of the invention, the following is also applicable: a method comprising facilitating creating and/or facilitating modifying (1) at least one device user interface element and/or (2) at least one device user interface functionality, the (1) at least one device user interface element and/or (2) at least one device user interface functionality based, at least in part, on data and/or information resulting from one or any combination of methods or processes disclosed in this application as relevant to any embodiment of the invention, and/or at least one signal resulting from one or any combination of methods (or processes) disclosed in this application as relevant to any embodiment of the invention.

For various example embodiments of the invention, the following is also applicable: a method comprising creating and/or modifying (1) at least one device user interface element and/or (2) at least one device user interface functionality, the (1) at least one device user interface element and/or (2) at least one device user interface functionality based at least in part on data and/or information resulting from one or any combination of methods (or processes) disclosed in this application as relevant to any embodiment of the invention, and/or at least one signal resulting from one or any combination of methods (or processes) disclosed in this application as relevant to any embodiment of the invention.

In various example embodiments, the methods (or processes) can be accomplished on the service provider side or on the mobile device side or in any shared way between service provider and mobile device with actions being performed on both sides.

The invention is defined in the appended claims 1 to 13.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details can be modified in various obvious respects, all without departing from the Spirit and scope of the invention. Accordingly, the drawings and description are to be regarded as illustrative in nature, and not as restrictive.

### BRIEF DESCRIPTION OF THE DRAWINGS

The embodiments of the invention are illustrated by way of example, and not by way of limitation, in the figures of the accompanying drawings:
FIG. 1 is a diagram of a system for identifying and coordinating parking spaces for a group of vehicles travelling to a common destination, according to one embodiment;
FIG. 2 is a diagram of the components of a group parking platform, according to one embodiment;
FIGs. 3 and 4 are flowcharts of processes for identifying and coordinating parking spaces for a group of vehicles travelling to a common destination, according to various embodiments;
FIG. 5A-5F are diagrams of user interfaces utilized in the processes of FIGs. 3 and 4, according to various embodiments;
FIG. 6 is a diagram of hardware that can be used to implement an embodiment of the invention;
FIG. 7 is a diagram of a chip set that can be used to implement an embodiment of the invention; and
FIG. 8 is a diagram of a mobile terminal (e.g., handset) that can be used to implement an embodiment of the invention.

### DESCRIPTION OF SOME EMBODIMENTS

Examples of a method, apparatus, and computer program for identifying and coordinating parking spaces for a group of vehicles travelling to a common destination. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

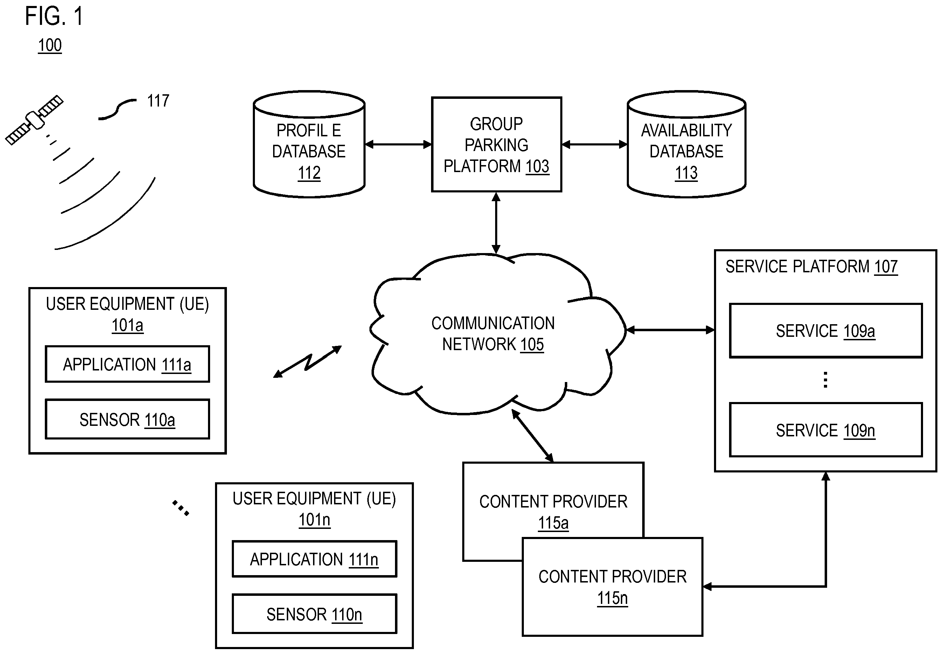

FIG. 1 is a diagram of a system for identifying and coordinating parking spaces for a group of vehicles travelling to a common navigation destination, according to one embodiment. The common navigation destination, which may be specified by different drivers and/or members of a vehicle group, may include, for example, an address, a point of interest, a general location or area, or a combination thereof; all of which may be within a certain proximity to one another. As discussed previously, service providers and device manufactures are increasingly interested in developing location-based services to provide users with useful tools for navigating to destinations, improving the quality of their travels, etc. By way of example, many mobile devices and in-vehicle navigation systems are equipped with global positioning sensors and navigation and/or mapping applications for accessing turn-by-turn directions, point of interest information, routing options, parking data and other types of navigation information. Typically, the navigation information is accessed by users upon request, such as via a navigation application, for accommodating their individual navigation needs. Similarly, automated vehicles may be configured with embedded systems for guiding vehicles to a specified destination.

Unfortunately, these applications and systems are limited in their ability to provide relevant navigation information regarding parking space availability for a group of users travelling to a common destination. For example, in the case where a group of vehicles are travelling to the same restaurant, there is currently no convenient means for the drivers to identify parking spaces for each group member that are as close as possible to each other at or near the destination. Moreover, current navigation and/or location based services and applications do not enable members of the group to coordinate and synchronize their parking efforts based on mutual navigation to the restaurant.

To address this problem, system 100 of FIG. 1 enables a location based service, such as a navigation application and/or system, to identify parking spaces for multiple vehicles belonging to a group based on a common destination. In one embodiment, a group parking platform 103 interfaces with one or more user equipment (UE) 101a-101n (also collectively referred to as UE 101) configured with one or more navigation applications 111a-111n (also collectively referred to as applications 111). By way of example, the UE 101 may include a mobile device, tablet computer, in-vehicle navigation system or the like. The navigation applications 111 may acquire or set navigation information regarding the common destination of the group. For the purpose of illustration, the group is referred to herein as a vehicle group, which may include one or more users of UE 101, drivers of vehicles involved in travelling to the destination in common, autonomous vehicles involved in travelling to the destination in common or passengers of vehicles travelling to the destination in common.

By way of example, the group parking platform 103 enables the identification, selection and/or establishment of members of the vehicle group through various selection, connection or synchronization means, including via wireless networking identification (e.g., Bluetooth, ZigBee, mesh networking). As another example, the vehicle group may be established by way of a common interfacing of the individual members of the vehicle group to the group parking platform 103 via the navigation application 111. Under this scenario, the members of the group establish their common association as they access the navigation application to generate navigation information regarding the common destination (e.g., via a group selection function of the user interface or via an interface to a social networking site).

In addition, one or more roles, priorities or assignments may be associated with group members as a means of forming the group. For example, a member of the vehicle group may be assigned of the role of primary driver or lead parking facilitator. As another example, one vehicle may be given a higher priority than another during a navigation session. Per this approach, the highest priority vehicle is assigned to the most suitable parking location. This may allow the driver or passengers of the vehicle that first arrives (highest priority vehicle) to facilitate entry/access to the common destination-i.e., provide user identification, authorization or key entry in the case of a locked gate/door or members only location. It is noted that the role, priority or assignment may be specified or assigned to group members based on the relationship of the members to one another, the member that initiated the group parking space identification request, etc. Furthermore, the group parking platform 103 may employ any means of group identification, group establishment or shared application interaction.

In one embodiment, the group parking platform 103 may be configured to interface directly with a service platform 107. The service platform 107 may provide users with various location based services 109a-109n (also collectively referred to as services 109). In addition, the group parking platform 103 may interface with one or more content providers 115a-115n (also collectively referred to as content providers 115) that provide/deliver content of various types and genres (e.g., navigation content, travel content, locality content, marketing content) upon request. Requests may be initiated via communication network 105 by way of the location based applications 111 via the UE 101 with respect to criteria. By way of example, the criteria may include search criteria, such as address information or point of interest information, for accessing navigation information (e.g., turn-by-turn directions, routing information, maps, driving instructions, etc.) related to a navigation destination.

In one embodiment, the group parking platform 103 interfaces with the application 111 to enable the processing of parking criteria information per the vehicle group. The parking criteria information may include any data for enhancing the search and/or navigation request capability of the navigation application 111. In addition, the parking criteria information may include one or more specifications for accommodating the parking needs of the group. By way of example, the parking criteria information may include a specified proximity of one or more available parking spaces for members of the vehicle group to each other. Under this scenario, a member of the vehicle group may specify that the parking spaces be within a 200 meter range of each other or that the parking spaces be adjacent to each other. As another example, the criteria may specify the preferred proximity of a set of parking spaces for the vehicle group to the navigation destination. Under this scenario, a member would specify that a set of identified parking spaces be within 100 meters of a restaurant the vehicles are travelling to.

Still further, the parking criteria information may include data for specifying the dimensions, type, make or model of the vehicles associated with the vehicle group, the number of vehicles comprising the group or contextual information associated with the plurality of vehicles or the passengers/drivers. One or more of the aforementioned parking information criteria may be specified-i.e., provided as user input-by at least one of the members of the group (e.g., a lead or primary member) for coordinating the parking space identification and navigation process. The parking criteria information may be submitted in connection with the navigation information request for navigating to or identifying the common destination. As such, the parking criteria information enables the requirements and/or preferences of the vehicle group to be accounted for. Furthermore, the use of parking criteria information via the group parking platform 103 in connection with the navigation application 111 enhances the search capabilities of the application 111 for identifying optimal parking spaces for the group.

In one embodiment, the group parking platform 103 can also convey feedback information to the navigation system or service 109 based on fulfillment (or extent thereof) of the parking criteria information. For example, if parking spaces are not available within a predefined distance from the common destination and/or from the other users/vehicles, this event may be fed back to the navigation system. Resultantly, this may trigger identification/querying of an alternate navigation destination (e.g., similar to the original) by the platform 103 that may fulfill the parking criteria information. Alternatively, a message may be generated by the platform 103 for presentment to the group for requesting user specification of an alternate navigation destination. As such, in the case where a group of people are travelling to a shopping mall and the parking lot is full, they may readily identify another shopping mall with more parking availability. It is noted that the group parking platform 103 enables continuance of the navigation session per the parking criteria information until fulfillment.

In one embodiment, the group parking platform 103 interacts with the service 109 to determine at least one recommendation corresponding to the group parking request (i.e., as submitted via the navigation application). By way of example, the recommendation may specify the location of parking spaces to be assigned to the vehicles relative to the destination, the assignment of the vehicles to the respective parking spaces, or a combination thereof. The determination process may include, for example, processing the parking criteria information against location based information maintained by or associated with the service to identify one or more parking spaces that match the criteria and/or correlate to the navigation destination. The determination process may also include the analyzing of sensor or probe information as collected by one or more sensors 110a-110n (also collectively referred to as sensors 110) of the UE 101 of a member to determine contextual information related to the user, other users, the UE 101 or other UE. Resultantly, the contextual information may be analyzed throughout the navigation session to determine the fulfillment of parking criteria information, changes in status of the members of the group, etc.

By way of example, sensors 110 (e.g., of a mobile device or embedded within the vehicle) may be used as GPS receivers for interacting with one or more satellites 117 for determining speed, position and location data associated with the members of the group. In addition, the sensors may gather tilt data (e.g., a degree of incline or decline of the vehicle during navigation), motion data, light data, sound data, image data, weather data, temporal data and the like associated with the users (members) and/or UEs 101 that comprise the group. Still further, the sensors 110 may detect local or transient network and/or wireless signals, such as those transmitted by nearby devices during navigation of a vehicle to a parking space of the navigation destination. This may include, for example, network routers as configured within a premise (e.g., home or business), another UE 101 or communicable traffic systems (e.g., traffic lights, traffic cameras, traffic signals, digital signage). It is further noted, in certain implementations, that the sensors of the vehicle may be configured to interact with the sensors 110 of the UE 101 for enabling data exchange and interaction. The exchange may be facilitated by way of any known or still developing range based or wireless communication protocols.

Still further, contextual information regarding the users may also be accessed from other applications of the UE 101. For example, the group parking platform 103 may access calendar data, social networking data, event data or the like regarding a member of the vehicle group. This data may be used by the group parking platform 103 in conjunction with other context information to determine the length of time members may occupy an available parking space. Based on this information, the platform 103 may then determine the optimal time to schedule arrival of the vehicle group or a specific vehicle thereof, an optimal parking space assignment, which vehicle should be determined the lead vehicle and/or given priority for a specific parking space, etc. For example, in the case where a member has limited availability at the common navigation destination based on a scheduled appointment at the apartment, this vehicle may be placed nearest to the parking lot exit. As another example, in the case where a member has to leave in one hour from arrival to a parking space, this vehicle may be placed at a meter that accommodates one hour parking while the others are placed at parking spaces that accommodate more time.

In one embodiment, the group parking platform 103 may also determine a recommendation based on an anticipated amount of time of availability of one or more parking spaces. This may include, for example, analyzing the contextual data gathered per the sensors 110 to determine. Also, parking availability information (e.g., historical parking availability data) may be analyzed for determining a typical duration or optimal time range of availability (e.g., 6:30pm-7:20pm) or occupancy of one or more parking spaces for a given navigation destination. When the expected time of arrival of a vehicle or group is within the (typical) range of availability of a parking space, this parking space is determined as available by the group parking platform 103. Conversely, when the expected time of arrival is determined to correspond to a typical time of occupancy of a parking space, the parking space is determined as not available.

In one embodiment, the group parking platform 103 may also determine a recommendation for the group based on the processing of parking criteria information against parking availability data maintained by the platform 103. The parking availability data may be maintained by the platform 103 via availability database 113 and may be culled by the group parking platform 103 from various sources. For example, the parking availability data may include sensor data for indicating current or historic parking space use or availability. This data may be gathered from one or more digital parking meters, one or more automated parking systems, one or more vehicle inventory systems or the like. The parking availability data may also include historical parking pattern and use data as generated from various sources (e.g., municipality data, traffic service data, business/vendor data), crowd sourced information, feedback information from members of the vehicle group, or any other data for indicating the availability of or use of parking spaces for a given location.

It is noted that the group parking platform 103 may perform the above described executions concurrently or as needed in response to submission of a group parking search request via the navigation application 111. In addition, the group parking platform 103 may also be configured to regularly update the parking availability data-i.e., retrieve the data from various sources-to enhance the accuracy and relevancy of a recommendation.

In one embodiment, the group parking platform 103 may assign a score or viability ranking to the one or more parking spaces recommended to a member based on the extent to which the recommendations match the parking criteria information and/or specified navigation location. The scoring may be based on multiple factors, such as an extent of proximity of a parking space to the navigation destination, wherein a closer proximity to the destination corresponds to a higher ranking. Another factor may include a likelihood of availability of the parking space relative to the expected time of arrival information for a member, wherein a parking space that typically has a higher range of availability relative to the current time receives a higher ranking. As yet another factor, a higher ranking may be assigned to the parking space that most closely fits the specified dimension requirements of a vehicle. While various means of scoring may be employed, it is noted that the group parking platform 103 may account for multiple factors in determining a recommended parking space. Furthermore, the scoring may be adapted subject to changes in contextual information regarding the vehicle group, one or more members thereof, conditions associated with the navigation destination, or a combination thereof.

In one embodiment, the group parking platform 103 interacts with the service 109, the application 111, the content provider 115 or a combination thereof to cause a presenting of the recommendation to the UE 101, i.e., via a group parking user interface. The group parking user interface may be presented to the UE 101 of each respective member of the vehicle group for facilitating shared communication and coordination of the navigation and/or parking effort. By way of example, the group parking interface may be rendered to the UE 101 via one or more application programming interface (API) executions of the platform 103. In certain instances, the group parking interface may be integrated for use in connection with the navigation application 111, wherein parking space availability, group member parking space assignments and the like are presented in conjunction with location based information and/or navigation information (e.g., maps).

Still further, the parking space availability and assignment recommendations may be presented to an embedded system of a vehicle, such as an audio system, electronic dashboard or windshield display system via API executions for these systems accordingly. As such, it is noted that the UE 101 is not limited to a mobile device but rather any device capable of interfacing with the group parking platform 103 via a network 105. It is contemplated in future embodiments that parking assignments and/or recommendations may be rendered to a driving system of an autonomous vehicle for triggering a self-driving mode of execution of the vehicles within the group, other vehicles associated with one or more optimal parking spaces determined for the group, or a combination thereof.

In one embodiment, the group parking platform 103 causes recommendations to be presented to the group parking user interface (i.e., per the navigation application 111) as one or more graphical elements, one or more textual elements, one or more virtual elements, one or more audible elements, or a combination thereof. For the purpose of illustration herein, presenting of the recommendations may include any means of rendering, conveying and/or displaying of parking space assignments to the members per UE 101. As noted, the recommendations may specify the available parking spaces, the assignment of the group members to said parking spaces, instructions and/or directions for navigating to the parking spaces, estimated time of availability of the parking spaces, feedback information from one or more of the group members regarding the parking spaces, etc. The group parking interface may support convenient communication and interaction between respective members of the group for coordinating the mutual parking effort.

For example, an assigned score may be presented in association with an available parking space recommendation or set thereof. Per this execution, multiple recommendations determined by the group parking platform 103 may be labeled according to the level of match and/or viability (e.g., from highest to lowest) for the benefit of the group. Presentment of the score enables the vehicle group to pursue those parking space recommendations having the highest score first and other recommendations only if necessary. In certain implementations, the recommendations may further be presented as an area map, heat map or the like for depicting the location and/or viability of sets of available parking spaces to accommodate group.

As another example, the recommendations may be presented with respect to other point of interest information against the map, such as local restaurants, bars or stores, for enabling further refinement of the parking criteria information. For example, a set of parking spaces having a higher score and thus determined a primary recommendation due to its proximity to the navigation destination may be deemed less desirable to one or more members of the group due to the proximity of a tertiary recommendation to an ice cream shop. The member may select the tertiary recommendation over the primary recommendation on this basis, or be prompted by the group parking platform, to refine the parking criteria information accordingly. In certain instances, the score associated with the recommendation is adapted accordingly to reflect the change in preference of the group.

Still further, per the group parking user interface, group preference information may be optionally stored by one or more members of the group to a profile database 112. The profile may be associated with a registration of at least one of the members of the group and may be used for maintaining search results of the group or navigation destination requests per the specific parking criteria information. In addition, the profile may specify one or more permissions, including permission for the group parking platform 103 to acquire sensor information related to the UE 101 via sensors 110 during navigation.

Under this approach, subsequent parking space search requests from the navigation application 111 may be readily recalled and executed. In addition, the parking space search results for the group may be continually refined over time based on patterns of use, adherence to the recommendations or scoring of the recommendations. It is noted, however, that the group parking platform 103 may enable execution of a group-based parking space identification request without requiring a registration procedure or generation of a profile. Rather, the group members need only give their consent to interact with one another via the group parking platform 103, to share relevant contextual information, etc.

In one embodiment, the group parking user interface also enables group members to manually assign vehicles to available parking spaces as a means of further enhancing group interaction. For example, a lead member of the group (e.g., the member that initiated the parking space and/or navigation search request), may assign specific parking spaces to different members during the course of navigation to a parking space. The parking space assignments suggested manually by a member may differ from a recommendation determined by the group parking platform 103; thus enabling the platform 103 to support real time feedback regarding from members to be employed for the benefit of the group.

By way of example, the manual assignment process may be performed by the lead member by dragging an icon representative of a second vehicle into an available parking space. The available parking space may also be depicted via the interface, wherein the dragging of the second vehicle represents to the group that the second driver is to now occupy the specified parking space. The group parking platform 103, per this execution, continues to track contextual information for each member to determine fulfillment of the assignment while also updating the user interface elements of the group parking user interface for the UE 101 of each group member accordingly. Hence, each member is presented with real-time information for indicating a response of each member to a recommendation, whether a parking space was occupied, the navigation destination status, the status of a member or vehicle, etc.

In one embodiment, temporal information regarding one or more available parking spaces, one or more members, or a combination thereof may be presented in connection with a recommendation for enabling joint coordination of the parking effort. For example, the members of the group may be presented with expected time of arrival information for each member of the group along with an estimated time of continued availability of a recommended parking space. In this way, the group members may be aware of the likelihood of the parking space still being available given the impending arrival of a member or as a result of a change in the time of arrival due to traffic conditions, change in status of the member or vehicle, etc. Still further, a vehicle in the group that arrives prior to the impending vehicle may occupy two parking spaces (e.g., for a limited period of time) in anticipation of the arrival of the other group member.

Still further, the group parking platform 103 may determine that a recommended parking space for a member of the group or set thereof is no longer available or cannot accommodate the needs of the group. This determination may be based on updated contextual information, updated parking availability information 113, feedback information from one or more members of the group, or a combination thereof. Based on this determination, the platform 103 may be configured to automatically initiate a query for a different navigation destination that corresponds to the parking criteria information of the vehicle group. For example, in the absence of parking spaces for a group of four within 200 meters of a sports bar (e.g., the navigation destination), an alternate sports bar, venue or the like may be identified for accommodating the group.

In one embodiment, in the case of autonomous vehicles having embedded UE 101, the group parking platform 103 may enable the performance of one or more group parking optimization scenarios. For example, a first vehicle already at or near a set of recommended parking spaces may send a request to an autonomous car parked in an occupied space suited to move to another space in preparation of the arrival of a group member. This scenario may be especially practical in instances where the vehicles are parked in an on-street parking zone where the autonomous vehicle requested to move need only maneuver forward or backward to provide the needed parking space.

By way of example, the group parking platform 103 may be implemented as a cloud based service, hosted platform or the like for exchanging as well as receiving information from the services 109, providers 115 or applications 111. Alternatively, the group parking platform 103 may be directly integrated for processing data generated and/or provided by the services 109, providers 115 or applications 111. Per this integration or interface, the group parking platform 103 may translate location based information, navigation related content or the like as generated and exchanged during a navigation session into useful data for supporting group parking.

By way of example, the communication network 105 of system 100 includes one or more networks such as a data network, a wireless network, a telephony network, or any combination thereof. It is contemplated that the data network may be any local area network (LAN), metropolitan area network (MAN), wide area network (WAN), a public data network (e.g., the Internet), short range wireless network, or any other suitable packet-switched network, such as a commercially owned, proprietary packet-switched network, e.g., a proprietary cable or fiber-optic network, and the like, or any combination thereof. In addition, the wireless network may be, for example, a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), Long Term Evolution (LTE) networks, code division multiple access (CDMA), wideband code division multiple access (WCDMA), wireless fidelity (WiFi), wireless LAN (WLAN), Bluetooth®, Internet Protocol (IP) data casting, satellite, mobile ad-hoc network (MANET), and the like, or any combination thereof.

The UE 101 is any type of mobile terminal, fixed terminal, or portable terminal including a mobile handset, station, unit, device, multimedia computer, multimedia tablet, Internet node, communicator, desktop computer, laptop computer, notebook computer, netbook computer, tablet computer, personal communication system (PCS) device, personal navigation device, personal digital assistants (PDAs), audio/video player, digital camera/camcorder, positioning device, television receiver, radio broadcast receiver, electronic book device, game device, or any combination thereof, including the accessories and peripherals of these devices, or any combination thereof. It is also contemplated that the UE 101 can support any type of interface to the user (such as "wearable" circuitry, etc.).

By way of example, the UEs 101, group parking platform 103, the service platform 107, and the content providers 115 communicate with each other and other components of the communication network 105 using well known, new or still developing protocols. In this context, a protocol includes a set of rules defining how the network nodes within the communication network 105 interact with each other based on information sent over the communication links. The protocols are effective at different layers of operation within each node, from generating and receiving physical signals of various types, to selecting a link for transferring those signals, to the format of information indicated by those signals, to identifying which software application executing on a computer system sends or receives the information. The conceptually different layers of protocols for exchanging information over a network are described in the Open Systems Interconnection (OSI) Reference Model.

Communications between the network nodes are typically effected by exchanging discrete packets of data. Each packet typically comprises (1) header information associated with a particular protocol, and (2) payload information that follows the header information and contains information that may be processed independently of that particular protocol. In some protocols, the packet includes (3) trailer information following the payload and indicating the end of the payload information. The header includes information such as the source of the packet, its destination, the length of the payload, and other properties used by the protocol. Often, the data in the payload for the particular protocol includes a header and payload for a different protocol associated with a different, higher layer of the OSI Reference Model. The header for a particular protocol typically indicates a type for the next protocol contained in its payload. The higher layer protocol is said to be encapsulated in the lower layer protocol. The headers included in a packet traversing multiple heterogeneous networks, such as the Internet, typically include a physical (layer 1) header, a data-link (layer 2) header, an internetwork (layer 3) header and a transport (layer 4) header, and various application (layer 5, layer 6 and layer 7) headers as defined by the OSI Reference Model.

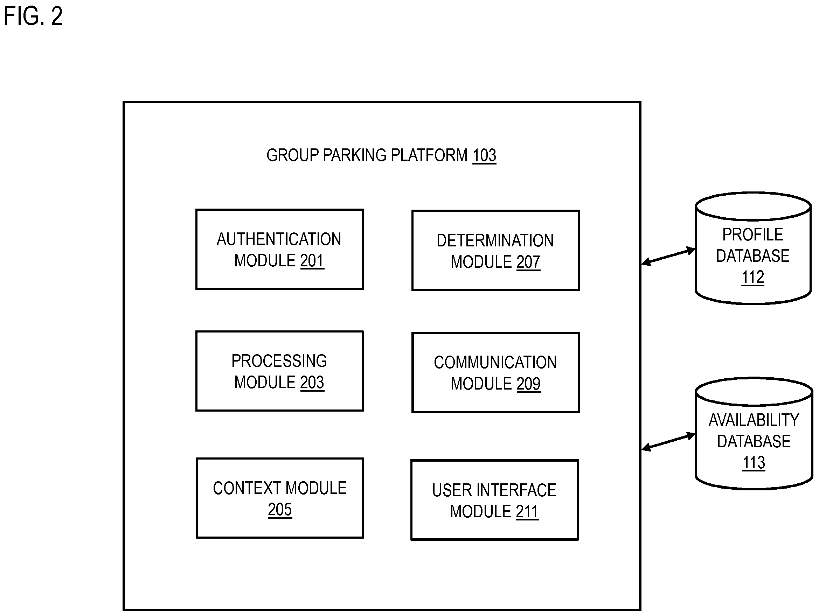

FIG. 2 is a diagram of the components of a group parking platform, according to one embodiment. By way of example, the group parking platform 103 includes one or more components for identifying and coordinating parking spaces for a group of vehicles travelling to a common destination. It is contemplated that the functions of these components may be combined in one or more components or performed by other components of equivalent functionality. In this embodiment, the group parking platform 103 includes an authentication module 201, a processing module 203, a context module 205, a determination module 207, a communication module 209 and a user interface module 211.

The authentication module 201 authenticates users and user devices 101a-101n for interaction with the group parking platform 103. By way of example, the authentication module 201 receives a request to access the group parking platform 103 via an application 111. The request may be submitted to the authentication module 201 via the communication module 209, which enables an interface between the navigation application 111 and the platform 103. In addition, the authentication module 201 may receive a first-time subscription request from a UE 101, a request to storing a group profile at database 112, a permission message validating consent by a UE 101 to share contextual information with the platform 103, or a combination thereof. It is noted that the authentication module 201 may further be configured to support and/or validate the formation of a vehicle group per any known group formation means.

The processing module 203 operates in connection with the authentication module 201 to process parking criteria information associated with a request. This may include, for example, determining the number of vehicles to be accommodated per the group. In addition, the processing module 203 may determine the specified proximity conditions of the group, including a preferred proximity of the available parking spaces to a navigation destination, a preferred proximity of the parking spaces to each other, a preferred time of arrival, a parking payment preference of the group (e.g., free versus metered parking), a preferred point of interest type corresponding to the navigation destination or within proximity of the navigation destination. Still further, the processing module 203 may determine data for specifying the dimensions, type, make or model of the vehicles associated with the vehicle group. It is noted that the parking criteria information may be provided as input by at least one member of the vehicle group by way of the user interface module 211.

The context module 205 may process contextual information associated with one or more members, the UE 101, the vehicles or a combination thereof. For example, the contextual information may include sensor information, environmental condition information, obstruction information and any other data capable of acquisition by way of the services 109 and sensors of the UE 101 and/or vehicle. The context module 205 may also provide information to the processing module 203 and determination module 207 for determining whether a recommended available parking space identified by the determination module 207 has been acquired/fulfilled by a member of the group.

The determination module 207 determines, based on the parking criteria information, the navigation destination as specified per the processing module 203, parking availability information as maintained per database 114, the contextual information as processed by the context module 205, or a combination thereof, at least one set of a plurality of available parking spaces available at the common navigation destination. Based on this availability, the determination module 207 then determines a recommended assignment of the vehicles in the group to the determined available parking spaces. By way of example, the determination may also be based on estimated time of arrival information for one or more vehicles of the group, historical parking space use and/or availability, or the like, for enabling group coordination of the parking effort.

The determination module 207 may also assign a score or viability ranking to the one or more parking spaces based on the extent to which the recommendations match the parking criteria information and/or specified navigation location. The scoring may be based on multiple factors, such as an extent of proximity of a parking space to the navigation destination, wherein a closer proximity to the destination corresponds to a higher ranking. Another factor may include a likelihood of availability of the parking space relative to the expected time of arrival information for a member, wherein a parking space that typically has a higher range of availability relative to the current time receives a higher ranking. Still further, a higher ranking may be assigned to the parking space that most closely fits the specified dimension requirements of a vehicle.

The determination module 207 may also operate in connection with the communication module 209 and user interface module 211 to cause the generation of a group parking user interface. The group parking user interface may be presented to the UE 101 of each respective member of the vehicle group for facilitating shared communication and coordination of the navigation and/or parking effort. By way of example, the determination module 207 may trigger the user interface module 211, which executes one or more application programming interface (API) executions of the platform 103 for presenting the available parking spaces, the recommended assignments of vehicles to the parking spaces, navigation information, etc. The group parking user interface may be rendered as one or more graphical elements, one or more textual elements, one or more virtual elements, one or more audible elements, or a combination thereof by the user interface module 211 accordingly.

Still further, the determination module 207 may be configured to process user (member) input for indicating manual assignment of one or more available parking spaces to respective members of a vehicle group. By way of example, this may include processing the input to determine which parking space is to be correlated with a particular member. In addition, the determination module 207 may process feedback information provided by a member via the group parking interface for indicating a change, update or the like with respect to a member.

The user interface module 211 operates in connection with the determination module 207 to cause the presentment of the recommendations and/or available parking spaces. This includes, for example, performing consistent updating of presentation elements and synchronizing the display of information to respective members of the group. Of note, the user interface module 211 may operate in connection with the communication module 209 for facilitating the exchange of navigation information via the communication network 105 with respect to the services 109, content providers 115 and applications 111.

The above presented modules and components of the group parking platform 103 can be implemented in hardware, firmware, software, or a combination thereof. Though depicted as a separate entity in FIG. 1, it is contemplated that the platform 103 may be implemented for direct operation by respective UEs 101. As such, the group parking platform 103 may generate direct signal inputs by way of the operating system of the UE 101 for interacting with the application 111. In another embodiment, one or more of the modules 201-211 may be implemented for operation by respective UEs as a platform 103, cloud based service, or combination thereof.

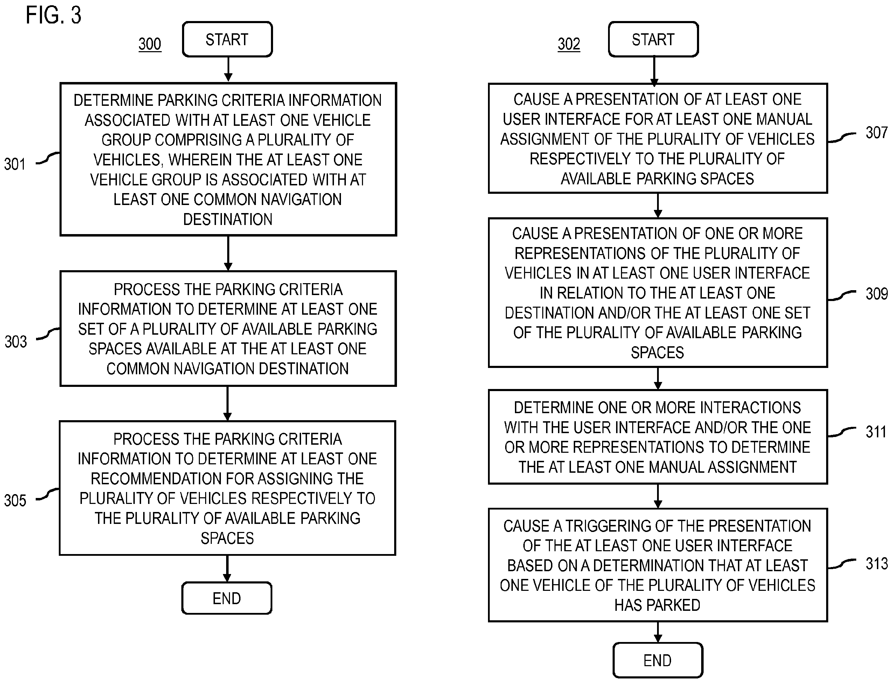

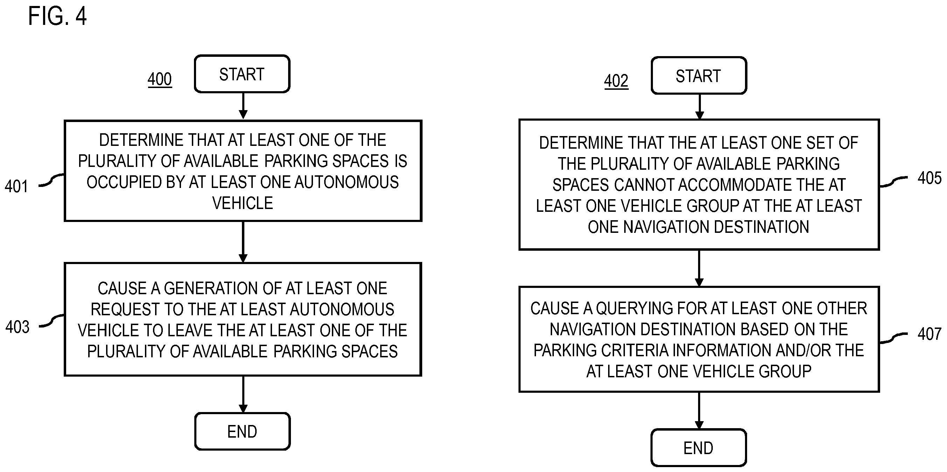

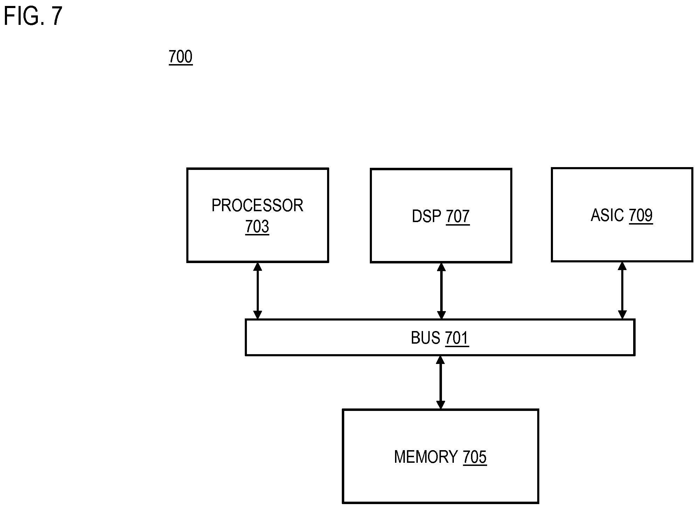

FIGs. 3 and 4 are flowcharts of processes for identifying and coordinating parking spaces for a group of vehicles travelling to a common destination, according to various embodiments. In one embodiment, the group parking platform 103 performs processes 300, 302, 400 and 402 and is implemented in, for instance, a chip set including a processor and a memory as shown in FIG. 7.

In step 301 of process 300, the group parking platform 103 determines parking criteria information associated with at least one vehicle group comprising a plurality of vehicles, wherein the at least one vehicle group is associated with at least one common navigation destination. In another step 303, the group parking platform 103 processes and/or facilitates a processing of the parking criteria information to determine at least one set of a plurality of available parking spaces available at the at least one common navigation destination. As noted, the parking criteria information may include, at least in part, a proximity of the plurality of available parking spaces to each other, a proximity of the at least one set to the at least one navigation destination, or a combination thereof. Still further, the parking criteria information may include, at least in part, (a) dimension information associated with the plurality vehicles; (b) contextual information associated with the plurality of vehicles, one or more passengers in the plurality of vehicles, or a combination thereof; or (c) a combination thereof. In step 305, the platform 103 causing, at least in part, an adaptation of (a) one or more presentation parameters for the presentation of the at least one navigation notification, (b) content information for the at least one navigation information, or (c) a combination thereof based, at least in part, on the compliance information.

Per step 305, the group parking platform 103 processes and/or facilitates a processing of the parking criteria information to determine at least one recommendation for assigning the plurality of vehicles respectively to the plurality of available parking spaces. As noted previously, the recommendation may be determined based various factors, including at least in part, a scoring of the available parking spaces with respect to the navigation destination, the parking criteria information, the vehicle group, or a combination thereof. Still further, the at least one set of the plurality of available parking spaces are further based, at least in part, on parking space sensor information, crowd-sourced information, historical information, or a combination thereof.

In step 307 of process 302, the group parking platform 103 causes, at least in part, a presentation of at least one user interface for at least one manual assignment of the plurality of vehicles respectively to the plurality of available parking spaces. The user interface may correspond to a group parking user interface and as mentioned previously, may be integrated for execution in connection with the navigation application 111 of user equipment of a member of the vehicle group. As such, the at least one user interface includes, at least in part, at least one mapping interface representing the at least one navigation destination-i.e., thus enabling the presentment and/or rendering of navigation information such as maps, turn-by-turn directions and other location based information.

In another step 309, the platform 103 causes, at least in part, a presentation of one or more representations of the plurality of vehicles in at least one user interface in relation to the at least one destination, the at least one set of the plurality of available parking spaces, or a combination thereof. In step 311, the platform 103 determines one or more interactions with the user interface, the one or more representations, or a combination thereof to determine the at least one manual assignment. It is noted that the manual assignment may be performed at the discretion of a member of the group, such as the lead member, as an alternative to a recommended assignment by the platform 103.

Per step 313, the group parking platform 103 causes, at least in part, a triggering of the presentation of the at least one user interface based, at least in part, on a determination that at least one vehicle of the plurality of vehicles has parked. By way of example, the platform 103 may persistently process contextual information, feedback information or a combination thereof provided by the one user equipment of the members of the vehicle group for determining current vehicle and/or user status information.

In step 401 of process 400 (FIG. 4), the group parking platform 103 determines that at least one of the plurality of available parking spaces is occupied by at least one autonomous vehicle. In another step 403, the platform 103 causes, at least in part, a generation of at least one request to the at least autonomous vehicle to leave the at least one of the plurality of available parking spaces. As noted previously, parking assignments and/or recommendations may be rendered to a driving system of an autonomous vehicle for triggering a self-driving mode of execution of the vehicles within the group, other vehicles associated with one or more optimal parking spaces determined for the group, or a combination thereof.

In step 405 of process 402, the group parking platform 103 determines that the at least one set of the plurality of available parking spaces cannot accommodate the at least one vehicle group at the at least one navigation destination. Per step 407, the platform 103 causes, at least in part, a querying for at least one other navigation destination based, at least in part, on the parking criteria information, the at least one vehicle group, or a combination thereof. As noted, the platform 103 may automatically initiate the query for a different navigation destination that corresponds to the parking criteria information for accommodating the group.

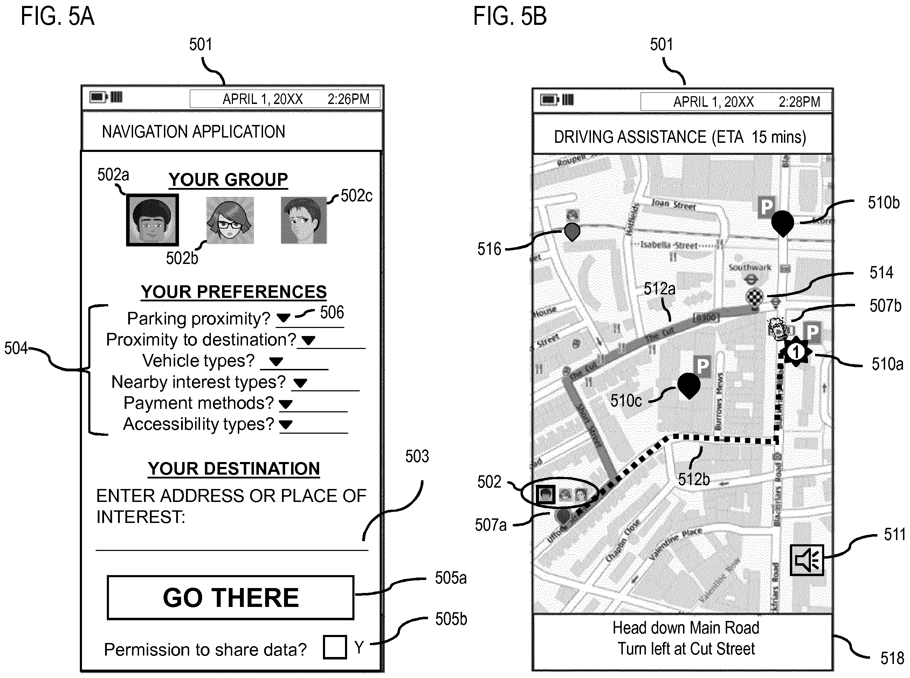

FIGs. 5A-5F are diagrams of user interfaces utilized in the processes of FIGs. 3 and 4, according to various embodiments. The diagrams depict the user interfaces of a navigation application, a group parking user interface, or a combination thereof for users of devices configured for interaction with the group parking platform 103. For the purpose of illustration, the users are members of a vehicle group and are also passengers of different vehicles for travelling to a common navigation destination. Under this scenario, the vehicle group members interact with one another and the group parking platform 103 to identify suitable parking spaces for their respective vehicles at a busy convention center (the common navigation destination). Also, one of the vehicles employed by the group members per this example is an autonomous vehicle equipped with an embedded navigation system for enabling automated driving.

Furthermore, per this example, the group members employ different user equipment 101 for interfacing with the group parking platform 103 and the associated navigation service. This includes, for example, a smartphone that executes a navigation application corresponding to user interface 501. In addition, another group member employs a tablet device that executes a navigation application corresponding to user interface 501a. Still further, another member operates an in-vehicle navigation system corresponding to user interface 501b. The group parking platform 103 performs one or more application programming interface executions for enabling the presentment of available parking spaces, the recommended assignments of vehicles to the parking spaces, navigation information, location-based information, etc., in association with the navigation application, a navigation service, etc.

In FIG. 5A, the group is formed and one or more icons 502a-502c for representing the members of the group are presented to user interface 501. The group members include a first member as represented by icon 502a, a second member as represented by icon 502b and a third member as represented by icon 502c. The icon of the first member 502a is highlighted, in this example, for indicating that the first member is designated as the leader of the vehicle group. The designation may be established by the first member or others, such as in the case where the first member is deemed most knowledgeable about the area, the navigation destination, etc. As another example, the first member may be prioritized to occupy the first available parking space on the basis of the position of the first member's vehicle with respect to the others. Under this scenario, the priority is established the first member is determined to occupy the lead car in the group based on analysis of context information for the respective group members, vehicles and/or user equipment 101.

As such, the first member (or others within the group) may specify one or more preferences 504 for executing a navigation and/or group parking search request per the navigation service. The preferences may include one or more drop-down menu selection buttons 506. Per these selection options, the members may indicate a preferred proximity of the group members to each other when parked (e.g., adjacent and/or), a preferred proximity of the vehicle group to the destination (e.g., to within X feet/meters of the destination), vehicle type information (e.g., make, model, style, year of manufacture) for accessing vehicle dimension and characteristic information, nearby interest preferences (e.g., bars, clubs), parking payment method options (e.g., meter, automated teller), accessibility preferences (e.g., handicapped accessible), etc.

In this example, each member gives their consent to share information per the checkbox selection option 505b. Also, the first member 502a specifies the parking spaces are to be within 20 meters of one another and at least within 300 meters of the convention center, which is entered to a destination input field 503. The first member also specifies an expected time of travel of the group to begin at 5:30pm, which is two hours from the current time of the request being submitted (e.g., lead group member is planning the trip in advance) per the navigation application. Still further, each group member specifies their vehicle make, model, type and year of manufacture information for enabling the retrieval of dimension and/or vehicle characteristic data regarding each vehicle. Finally, the third member 502c specifies a preference for free parking as well as a preference for parking within proximity of a pub if possible. Once entered, the primary member corresponding to icon 502a selects a GO THERE action button 505a for initiating the search request.

Resultantly, the group parking platform 103 processes inputs 504 and 503 as parking criteria information for initiating the navigation and parking space query. In conjunction with the navigation application and corresponding service, the group parking platform 103 then determines at least one recommendation to accommodate the group. As noted, the recommendation is determined based on the processing of the criteria against parking availability information, which includes details regarding historic and/or current parking space use and occupancy statistics correlating to the expected time of travel and/or arrival of the members. In addition, the platform 103 processes contextual information regarding each member, the device associated therewith, the navigation destination or the like. This may include the processing of location information, calendar information regarding the users, speed/movement information, etc. It is noted that additional members may also be invited to the group by existing group members subsequent to establishment of the navigation session. In this way, vehicles and members may be added along the way to the common navigation destination.

In FIG. 5B, the user interface 501 is shown in a Driving Assistance mode in response to selection of the GO THERE action button 505a. For the purpose of illustration, this view is rendered to the device of each of the members for presenting one or more graphical and/or textual elements against a map view. In this example, a navigation route 512a is shown and includes a starting point 507a, corresponding to the current location a group member and a final destination point 507b, corresponding to the location of the convention center. In addition, the user interface 501 presents the current date, time of travel information and expected time of arrival information. Per the execution of the group parking platform 103, the user interface 501 also presents three different sets of parking spaces that match the criteria/preferences of the members of the group with respect to the navigation destination 507b. Each set is presented against the map, as represented by icons 510a-510c, for depicting the relative location of each set with respect to the destination 507b. The recommended matching sets of parking spaces is presented in a prioritized fashion, wherein icon 510a represents a first priority recommended set of parking spaces, icon 510b a second and icon 510c a third. Under this scenario, it is noted that the closest set of parking spaces corresponding to the main parking lot of the convention center are not recommended due to the lack of availability of parking for the time of travel of the members, the limited size of the parking spaces relative to the vehicles of the members, etc.

It is noted that the prioritization of each set is based on the extent of match (scoring) of the identified parking spaces to the parking criteria information 504 specified during the query. Hence, in this case, the highest priority set as represented per icon 510a best matches the criteria in terms of historical or current availability of parking spaces for the expected time of travel of the members. In addition, the match /score is based on fulfillment of the proximity conditions for the members to each other and the destination as well as pub access, parking type (free parking), etc. Consequently, the platform 103 causes presentment of the highest priority set with a different icon type 510a than the other sets of parking spaces. In addition, a navigation route 512b is presented for representing a path of travel to the location of the highest priority set. Icon 514 is also presented to the map view for indicating the relative location of a pub within range of the location of the preferred set of parking spaces 510a.

Per this example, each of the group members is shown as starting from the same location 507a. This is also depicted per the presentment of icons 502a-502c (referred to collectively as icons 502) against the map at the location 507a, thus representing the current location of each group member. In the case where the group members are starting from different locations during a navigation session to the destination 507b-i.e., from their respective homes-different starting locations may be presented to the map accordingly. For example, icon 502a corresponding to the primary group member may be juxtaposed against the map with respect to starting location marker 507a while icon 502b of the second group member may be juxtaposed against the map with respect to starting location marker 516 (i.e., corresponding to the home of the second group member). Consequently, the navigation route 512b and corresponding navigation details (e.g., textual 518 or audible 511) for driving to the highest priority set of parking spaces 510a would be presented from the perspective of the second member accordingly. The group parking platform 103 thus enables respective members to be presented information related to the group from their perspective per their device.

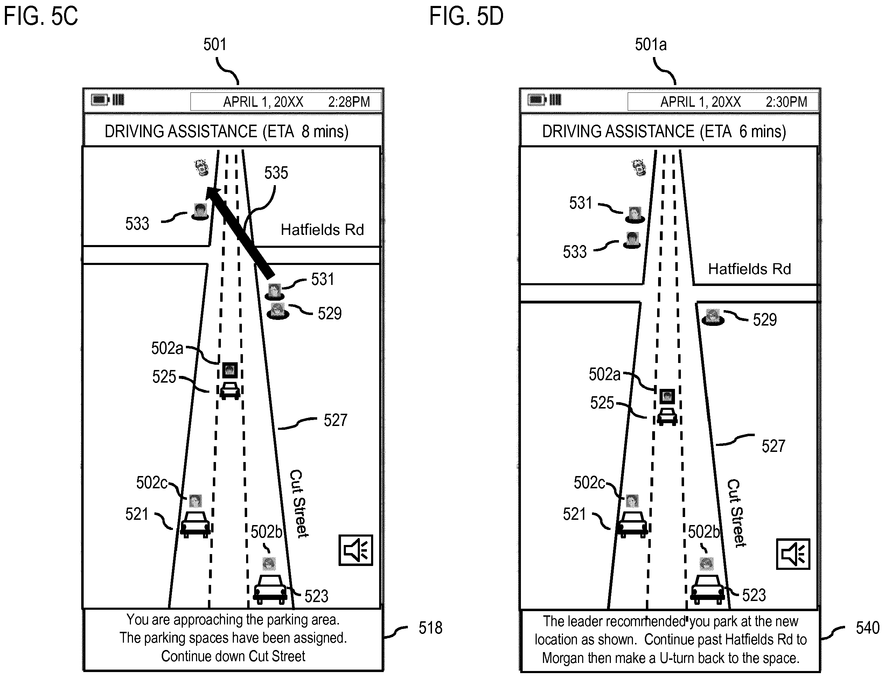

In FIG. 5C, the user interface 501 of the navigation application is shown as the group travels to the location of the highest priority set of parking spaces. Icons 521, 523 and 525 for representing the vehicles of the third member (e.g., per icon 502c), the second member (e.g., per icon 502b) and the first member (e.g., per icon 502a) respectively are shown according to a street navigation view. In this case, the lead vehicle 525 of the primary group member is ahead of the vehicles 521 and 523 of the other members of the group. As such, the icons 521-525 appear to move within the interface in connection with the physical movement of each group member's vehicle along a street (e.g., depicted within the navigation view as street 527) corresponding to the suggested navigation route 512b. A similar view is presented to the user interface of the other members for representing the current status, relative location, speed, proximity, etc., of the other members of the group relative to the specified set of parking spaces (e.g., corresponding to location 510a) and/or the destination.

Also presented is navigation guidance information 527, which includes instructions, notifications, alerts or any other messages for aiding the members during travel. In this example, the guidance is presented/conveyed to the member textually as well as audibly and includes an instruction that the member is approaching the location 510a of the highest priority set of parking spaces. In addition, the guidance specifies that the members have all been assigned parking spaces per execution of the group parking platform 103 corresponding to parking space assignment icons 529-533. By way of example, the first member is assigned to parking space location 533 while the second and third members are assigned to parking space locations 529 and 531 respectively. It is noted that the parking space assignments may be automatically adapted by the group parking platform 103 in response to changing contextual conditions regarding the group. For example, in the case where the second member 502b increases speed and begins to advance to the assigned parking space locations ahead of the third member 502c, the assignment icon 529 for the second member may be shown to be placed ahead of the assignment icon 531 for the third member.

At a later time during the navigation, the lead group member decides to manually adapt the recommended parking assignments 529-533 of the group. In this example, the lead group member 502a is well ahead of the other group members 502b and 502c and makes the decision as a result of witnessing a stalled vehicle at the location of the parking space 531 as assigned to the third member 502c. Resultantly, the lead group member touches the display screen of their device and moves assignment icon 531 to a different location corresponding to an open parking space. The movement of the assignment icon 531 is depicted by arrow 535, which represents a direction of movement of a stylus or finger of the lead group member for providing the manual input. In this case, the lead group member assigns the third member to a parking space located directly behind their own parking space.

In response to this assignment, the interface of each of the members is again updated to reflect the change. For example, in FIG. 5D, the user interface 501a of the third group member 502c is shown pursuant to the change with the assignment icon 531 moved to the new parking space location. In addition, the navigation guidance information 540 for the third group member is automatically updated to indicate the proper instructions for navigating to the new parking space location. It is noted that the group parking platform 103 may, in certain embodiments, cause presentment of an error message, dialogue window or other feedback message to the lead group member in instances where the manual assignment attempt does not match the parking criteria information set forth initially by the group. For example, if the movement of the assignment icon 531 was to a parking space location that exceeded the proximity threshold, a message may be presented to the member for (a) indicating that the action cannot be performed or (b) enabling the member to adapt the proximity threshold.

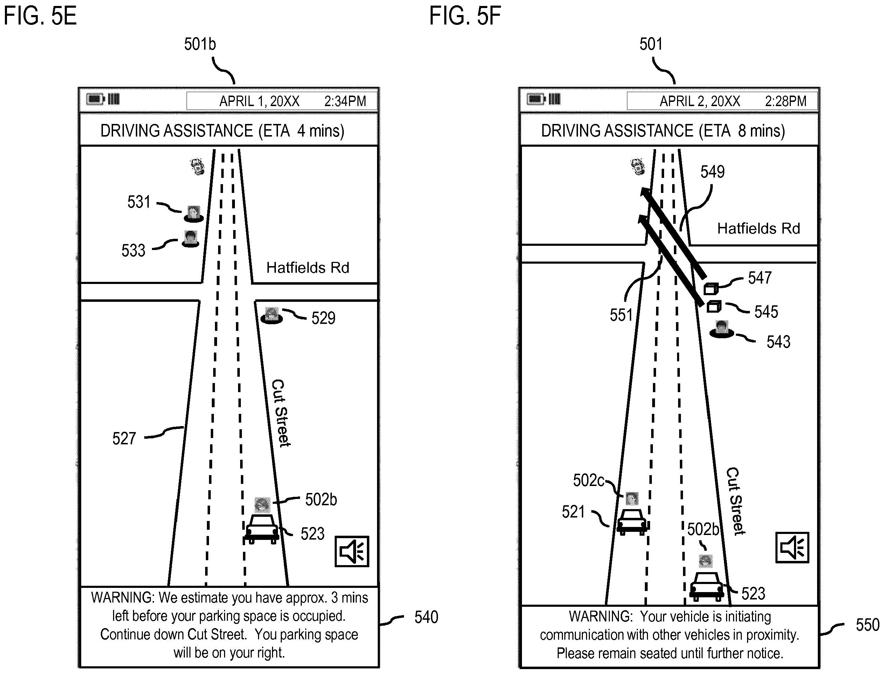

In FIG. 5E, the user interface 501b of the second group member is shown. In this example, the first and third group members are already parked at their assigned parking space locations as represented via assignment icons 533 and 531 respectively. The group parking platform 103 initiates generation of navigation guidance information 542 to the user interface 501b for indicating that the member has approximately three minutes to navigate to the assigned parking space before it is potentially not available or occupied. As noted before, the group parking platform 103 may base this approximation off of historical traffic data, parking pattern data or municipality information aggregated over time. In response to this warning, the second group member observes their current expected time of arrival exceeds the approximate time of parking space availability and decides to increase their speed to the parking space location 529 to meet the deadline.

Also, in response to receipt of the same warning regarding the second group member, the first and third group members are presented with a message for indicating a navigation option for temporary procurement of the location of the second member's parking space 529. This includes, for example, instructions and/or navigation directions for the first group member to disembark from their current parking space and temporarily occupy the second group member's assigned parking space. In addition, the third group member is instructed to maneuver forward such as to occupy the first group member's parking space location 533 and their own parking space location 533 temporarily, i.e., until the first group member arrives back to their original assigned parking space location 533.

In FIG. 5F, the autonomous vehicle of the group is configured to communicate with other autonomous vehicles for supporting optimized group parking. By way of example, when the lead group member arrives to the assigned parking space location 543 in an autonomous vehicle, the vehicle initiates communication with parked autonomous vehicles 545 and 547. Per this communication, the autonomous vehicle conveys instructions as generated by the group parking platform 103 for the parked vehicles 545 and 547 to park at the parking space locations that were designated originally for the second and third group members. The first group member is also presented with a warning as navigation guidance 550 via an in-vehicle navigation system for indicating the action being taken and instructions they are recommended to follow per this action.

In response to the communication-assuming the vehicles have the proper authorizations to embark upon request-the autonomous vehicles 545 and 547 maneuver to the other parking space locations as represented by arrows 549 and 551 respectively. As a result, the vehicles of the second and third group members are able to occupy the parking spaces of now removed autonomous vehicles 545 and 547. It is noted that the group parking platform 103 may also time the execution of the maneuvers of the parked autonomous vehicles 545 and 547 to occur based on the expected time of arrival of the second and third group members (e.g., as represented by their vehicle icons 521 and 523 respectively).

The processes described herein for identifying and coordinating parking spaces for a group of vehicles travelling to a common destination may be implemented via software, hardware (e.g., general processor, Digital Signal Processing (DSP) chip, an Application Specific Integrated Circuit (ASIC), Field Programmable Gate Arrays (FPGAs), etc.), firmware or a combination thereof. Such exemplary hardware for performing the described functions is detailed below.

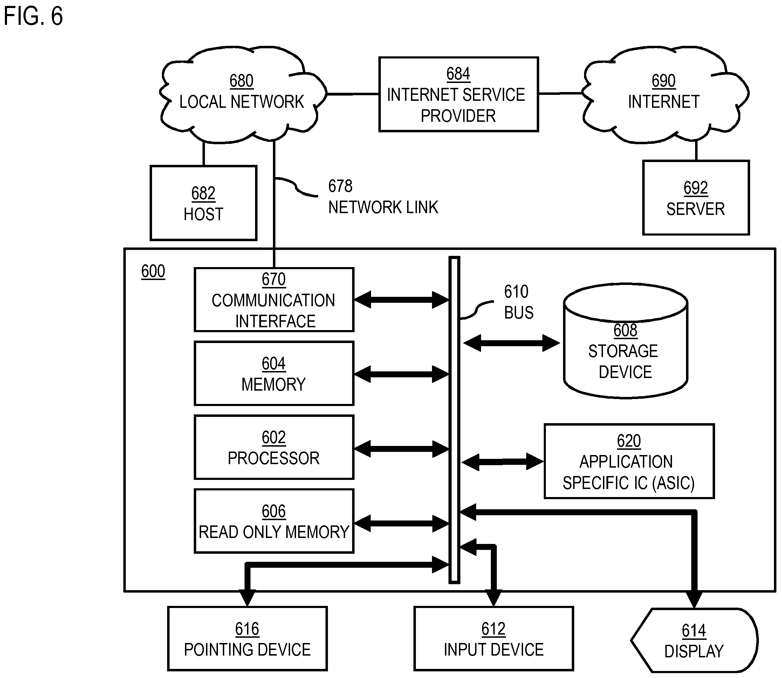

FIG. 6 is a diagram of a computer system that can be used to implement various exemplary embodiments. The computer system 600 includes a bus 601 or other communication mechanism for communicating information and one or more processors (of which one is shown) 603 coupled to the bus 601 for processing information. The computer system 600 also includes main memory 605, such as a random access memory (RAM) or other dynamic storage device, coupled to the bus 601 for storing information and instructions to be executed by the processor 603. Main memory 605 can also be used for storing temporary variables or other intermediate information during execution of instructions by the processor 603. The computer system 600 may further include a read only memory (ROM) 607 or other static storage device coupled to the bus 601 for storing static information and instructions for the processor 603. A storage device 609, such as a magnetic disk or optical disk, is coupled to the bus 601 for persistently storing information and instructions.

The computer system 600 may be coupled via the bus 601 to a display 611, such as a cathode ray tube (CRT), liquid crystal display, active matrix display, or plasma display, for displaying information to a computer user. An input device 613, such as a keyboard including alphanumeric and other keys, is coupled to the bus 601 for communicating information and command selections to the processor 603. Another type of user input device is a cursor control 615, such as a mouse, a trackball, or cursor direction keys, for communicating direction information and command selections to the processor 603 and for adjusting cursor movement on the display 611.

According to an embodiment of the invention, the processes described herein are performed by the computer system 600, in response to the processor 603 executing an arrangement of instructions contained in main memory 605. Such instructions can be read into main memory 605 from another computer-readable medium, such as the storage device 609. Execution of the arrangement of instructions contained in main memory 605 causes the processor 603 to perform the process steps described herein. One or more processors in a multi-processing arrangement may also be employed to execute the instructions contained in main memory 605. In alternative embodiments, hard-wired circuitry may be used in place of or in combination with software instructions to implement the embodiment of the invention. Thus, embodiments of the invention are not limited to any specific combination of hardware circuitry and software.

The computer system 600 also includes a communication interface 617 coupled to bus 601. The communication interface 617 provides a two-way data communication coupling to a network link 619 connected to a local network 621. For example, the communication interface 617 may be a digital subscriber line (DSL) card or modem, an integrated services digital network (ISDN) card, a cable modem, a telephone modem, or any other communication interface to provide a data communication connection to a corresponding type of communication line. As another example, communication interface 617 may be a local area network (LAN) card (e.g. for Ethernet™ or an Asynchronous Transfer Model (ATM) network) to provide a data communication connection to a compatible LAN. Wireless links can also be implemented. In any such implementation, communication interface 617 sends and receives electrical, electromagnetic, or optical signals that carry digital data streams representing various types of information. Further, the communication interface 617 can include peripheral interface devices, such as a Universal Serial Bus (USB) interface, a PCMCIA (Personal Computer Memory Card International Association) interface, etc. Although a single communication interface 617 is depicted in FIGs. 5A-5F, multiple communication interfaces can also be employed.

The network link 619 typically provides data communication through one or more networks to other data devices. For example, the network link 619 may provide a connection through local network 621 to a host computer 623, which has connectivity to a network 625 (e.g. a wide area network (WAN) or the global packet data communication network now commonly referred to as the "Internet") or to data equipment operated by a service provider. The local network 621 and the network 625 either use electrical, electromagnetic or optical signals to convey information and instructions. The signals through the various networks and the signals on the network link 619 and through the communication interface 617, which communicate digital data with the computer system 600, are exemplary forms of carrier waves bearing the information and instructions.

The computer system 600 can send messages and receive data, including program code, through the network(s), the network link 619, and the communication interface 617. In the Internet example, a server (not shown) might transmit requested code belonging to an application program for implementing an embodiment of the invention through the network 625, the local network 621 and the communication interface 617. The processor 603 may execute the transmitted code while being received and/or store the code in the storage device 609, or other non-volatile storage for later execution. In this manner, the computer system 600 may obtain application code in the form of a carrier wave.

The term "computer-readable medium" as used herein refers to any medium that participates in providing instructions to the processor 603 for execution. Such a medium may take many forms, including but not limited to computer-readable storage medium ((or non-transitory) -- i.e., non-volatile media and volatile media), and transmission media. Non-volatile media include, for example, optical or magnetic disks, such as the storage device 609. Volatile media include dynamic memory, such as main memory 605. Transmission media include coaxial cables, copper wire and fiber optics, including the wires that comprise the bus 601. Transmission media can also take the form of acoustic, optical, or electromagnetic waves, such as those generated during radio frequency (RF) and infrared (IR) data communications. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, and EPROM, a FLASH-EPROM, any other memory chip or cartridge, a carrier wave, or any other medium from which a computer can read.

Various forms of computer-readable media may be involved in providing instructions to a processor for execution. For example, the instructions for carrying out at least part of the embodiments of the invention may initially be borne on a magnetic disk of a remote computer. In such a scenario, the remote computer loads the instructions into main memory and sends the instructions over a telephone line using a modem. A modem of a local computer system receives the data on the telephone line and uses an infrared transmitter to convert the data to an infrared signal and transmit the infrared signal to a portable computing device, such as a personal digital assistant (PDA) or a laptop. An infrared detector on the portable computing device receives the information and instructions borne by the infrared signal and places the data on a bus. The bus conveys the data to main memory, from which a processor retrieves and executes the instructions. The instructions received by main memory can optionally be stored on storage device either before or after execution by processor.

FIG. 7 illustrates a chip set or chip 700 upon which an embodiment of the invention may be implemented. Chip set 700 is programmed to adapt navigation notifications based on a level of compliance of users to the notifications as described herein and includes, for instance, the processor and memory components described with respect to FIG. 6 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the chip set 700 can be implemented in a single chip. It is further contemplated that in certain embodiments the chip set or chip 700 can be implemented as a single "system on a chip." It is further contemplated that in certain embodiments a separate ASIC would not be used, for example, and that all relevant functions as disclosed herein would be performed by a processor or processors. Chip set or chip 700, or a portion thereof, constitutes a means for performing one or more steps of adapting navigation notifications based on a level of compliance of users to the notifications.

In one embodiment, the chip set or chip 700 includes a communication mechanism such as a bus 701 for passing information among the components of the chip set 700. A processor 703 has connectivity to the bus 701 to execute instructions and process information stored in, for example, a memory 705. The processor 703 may include one or more processing cores with each core configured to perform independently. A multi-core processor enables multiprocessing within a single physical package. Examples of a multi-core processor include two, four, eight, or greater numbers of processing cores. Alternatively or in addition, the processor 703 may include one or more microprocessors configured in tandem via the bus 701 to enable independent execution of instructions, pipelining, and multithreading. The processor 703 may also be accompanied with one or more specialized components to perform certain processing functions and tasks such as one or more digital signal processors (DSP) 707, or one or more application-specific integrated circuits (ASIC) 709. A DSP 707 typically is configured to process real-world signals (e.g., sound) in real time independently of the processor 703. Similarly, an ASIC 709 can be configured to performed specialized functions not easily performed by a more general purpose processor. Other specialized components to aid in performing the inventive functions described herein may include one or more field programmable gate arrays (FPGA) (not shown), one or more controllers (not shown), or one or more other special-purpose computer chips.

In one embodiment, the chip set or chip 700 includes merely one or more processors and some software and/or firmware supporting and/or relating to and/or for the one or more processors.

The processor 703 and accompanying components have connectivity to the memory 705 via the bus 701. The memory 705 includes both dynamic memory (e.g., RAM, magnetic disk, writable optical disk, etc.) and static memory (e.g., ROM, CD-ROM, etc.) for storing executable instructions that when executed perform the inventive steps described herein to adapt navigation notifications based on a level of compliance of users to the notifications. The memory 705 also stores the data associated with or generated by the execution of the inventive steps.

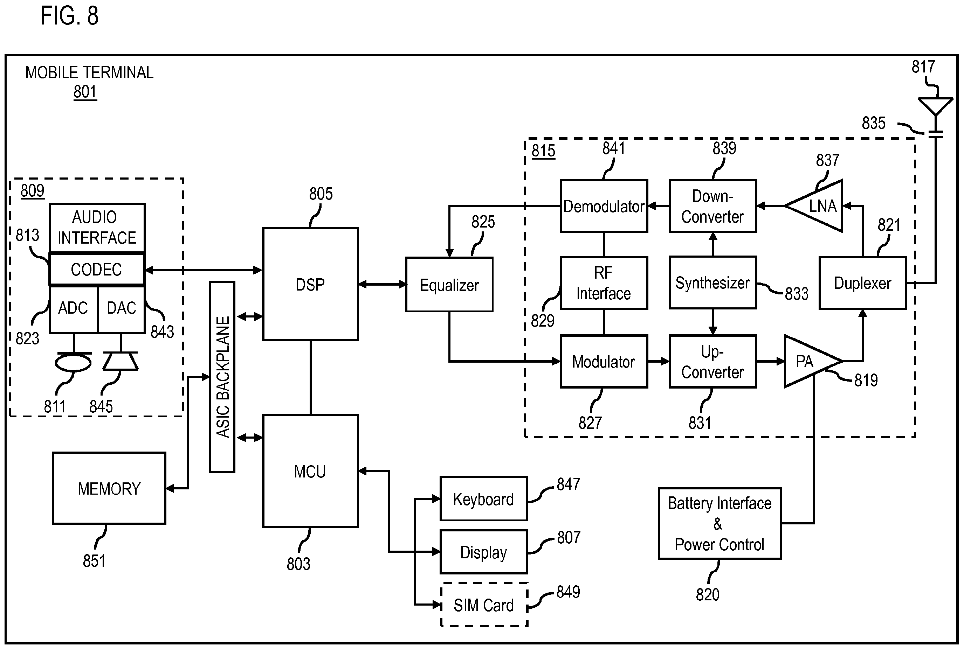

FIG. 8 is a diagram of exemplary components of a mobile terminal (e.g., handset) for communications, which is capable of operating in the system of FIG. 1, according to one embodiment. In some embodiments, mobile terminal 801, or a portion thereof, constitutes a means for performing one or more steps of adapting navigation notifications based on a level of compliance of users to the notifications. Generally, a radio receiver is often defined in terms of front-end and back-end characteristics. The front-end of the receiver encompasses all of the Radio Frequency (RF) circuitry whereas the back-end encompasses all of the base-band processing circuitry. As used in this application, the term "circuitry" refers to both: (1) hardware-only implementations (such as implementations in only analog and/or digital circuitry), and (2) to combinations of circuitry and software (and/or firmware) (such as, if applicable to the particular context, to a combination of processor(s), including digital signal processor(s), software, and memory(ies) that work together to cause an apparatus, such as a mobile phone or server, to perform various functions). This definition of "circuitry" applies to all uses of this term in this application, including in any claims. As a further example, as used in this application and if applicable to the particular context, the term "circuitry" would also cover an implementation of merely a processor (or multiple processors) and its (or their) accompanying software/or firmware. The term "circuitry" would also cover if applicable to the particular context, for example, a baseband integrated circuit or applications processor integrated circuit in a mobile phone or a similar integrated circuit in a cellular network device or other network devices.

Pertinent internal components of the telephone include a Main Control Unit (MCU) 803, a Digital Signal Processor (DSP) 805, and a receiver/transmitter unit including a microphone gain control unit and a speaker gain control unit. A main display unit 807 provides a display to the user in support of various applications and mobile terminal functions that perform or support the steps of adapting navigation notifications based on a level of compliance of users to the notifications. The display 807 includes display circuitry configured to display at least a portion of a user interface of the mobile terminal (e.g., mobile telephone). Additionally, the display 807 and display circuitry are configured to facilitate user control of at least some functions of the mobile terminal. An audio function circuitry 809 includes a microphone 811 and microphone amplifier that amplifies the speech signal output from the microphone 811. The amplified speech signal output from the microphone 811 is fed to a coder/decoder (CODEC) 813.

A radio section 815 amplifies power and converts frequency in order to communicate with a base station, which is included in a mobile communication system, via antenna 817. The power amplifier (PA) 819 and the transmitter/modulation circuitry are operationally responsive to the MCU 803, with an output from the PA 819 coupled to the duplexer 821 or circulator or antenna switch, as known in the art. The PA 819 also couples to a battery interface and power control unit 820.

In use, a user of mobile terminal 801 speaks into the microphone 811 and his or her voice along with any detected background noise is converted into an analog voltage. The analog voltage is then converted into a digital signal through the Analog to Digital Converter (ADC) 823. The control unit 803 routes the digital signal into the DSP 805 for processing therein, such as speech encoding, channel encoding, encrypting, and interleaving. In one embodiment, the processed voice signals are encoded, by units not separately shown, using a cellular transmission protocol such as enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., microwave access (WiMAX), Long Term Evolution (LTE) networks, code division multiple access (CDMA), wideband code division multiple access (WCDMA), wireless fidelity (WiFi), satellite, and the like, or any combination thereof.

The encoded signals are then routed to an equalizer 825 for compensation of any frequency-dependent impairments that occur during transmission though the air such as phase and amplitude distortion. After equalizing the bit stream, the modulator 827 combines the signal with a RF signal generated in the RF interface 829. The modulator 827 generates a sine wave by way of frequency or phase modulation. In order to prepare the signal for transmission, an up-converter 831 combines the sine wave output from the modulator 827 with another sine wave generated by a synthesizer 833 to achieve the desired frequency of transmission. The signal is then sent through a PA 819 to increase the signal to an appropriate power level. In practical systems, the PA 819 acts as a variable gain amplifier whose gain is controlled by the DSP 805 from information received from a network base station. The signal is then filtered within the duplexer 821 and optionally sent to an antenna coupler 835 to match impedances to provide maximum power transfer. Finally, the signal is transmitted via antenna 817 to a local base station. An automatic gain control (AGC) can be supplied to control the gain of the final stages of the receiver. The signals may be forwarded from there to a remote telephone which may be another cellular telephone, any other mobile phone or a land-line connected to a Public Switched Telephone Network (PSTN), or other telephony networks.

Voice signals transmitted to the mobile terminal 801 are received via antenna 817 and immediately amplified by a low noise amplifier (LNA) 837. A down-converter 839 lowers the carrier frequency while the demodulator 841 strips away the RF leaving only a digital bit stream. The signal then goes through the equalizer 825 and is processed by the DSP 805. A Digital to Analog Converter (DAC) 843 converts the signal and the resulting output is transmitted to the user through the speaker 845, all under control of a Main Control Unit (MCU) 803 which can be implemented as a Central Processing Unit (CPU).

The MCU 803 receives various signals including input signals from the keyboard 847. The keyboard 847 and/or the MCU 803 in combination with other user input components (e.g., the microphone 811) comprise a user interface circuitry for managing user input. The MCU 803 runs a user interface software to facilitate user control of at least some functions of the mobile terminal 801 to adapt navigation notifications based on a level of compliance of users to the notifications. The MCU 803 also delivers a display command and a switch command to the display 807 and to the speech output switching controller, respectively. Further, the MCU 803 exchanges information with the DSP 805 and can access an optionally incorporated SIM card 849 and a memory 851. In addition, the MCU 803 executes various control functions required of the terminal. The DSP 805 may, depending upon the implementation, perform any of a variety of conventional digital processing functions on the voice signals. Additionally, DSP 805 determines the background noise level of the local environment from the signals detected by microphone 811 and sets the gain of microphone 811 to a level selected to compensate for the natural tendency of the user of the mobile terminal 801.

The CODEC 813 includes the ADC 823 and DAC 843. The memory 851 stores various data including call incoming tone data and is capable of storing other data including music data received via, e.g., the global Internet. The software module could reside in RAM memory, flash memory, registers, or any other form of writable storage medium known in the art. The memory device 851 may be, but not limited to, a single memory, CD, DVD, ROM, RAM, EEPROM, optical storage, magnetic disk storage, flash memory storage, or any other non-volatile storage medium capable of storing digital data.

An optionally incorporated SIM card 849 carries, for instance, important information, such as the cellular phone number, the carrier supplying service, subscription details, and security information. The SIM card 849 serves primarily to identify the mobile terminal 801 on a radio network. The card 849 also contains a memory for storing a personal telephone number registry, text messages, and user specific mobile terminal settings.

While the invention has been described in connection with a number of embodiments and implementations, the invention is not so limited but covers various obvious modifications and equivalent arrangements, which fall within the purview of the appended claims. Although features of the invention are expressed in certain combinations among the claims, it is contemplated that these features can be arranged in any combination and order.

While certain exemplary embodiments and implementations have been described herein, other embodiments and modifications will be apparent from this description. Accordingly, the invention is not limited to such embodiments, but rather to the broader scope of the presented claims and various obvious modifications and equivalent arrangements.

## Claims

1. A method comprising:
determining parking criteria information associated with at least one vehicle group comprising a plurality of vehicles, wherein the at least one vehicle group is associated with at least one common navigation destination; and processing and/or facilitating a processing of the parking criteria information to determine at least one set of a plurality of available parking spaces available at the at least one common navigation destination,
wherein the parking criteria information includes at least one of (i) a proximity of the plurality of available parking spaces to each other, and (ii) a proximity of the at least one set of the plurality of available parking spaces to the at least one navigation destination.

2. A method of claim 1, wherein the parking criteria information further includes at least one of (a) dimension information associated with the plurality vehicles; (b) contextual information associated with the plurality of vehicles, one or more passengers in the plurality of vehicles, or a combination thereof.

3. A method according to any of claims 1-2, further comprising:
processing and/or facilitating a processing of the parking criteria information to determine at least one recommendation for assigning the plurality of vehicles respectively to the plurality of available parking spaces.

4. A method according to any of claims 1-3, further comprising:
causing, a presentation of at least one user interface for at least one manual assignment from at least one member of the vehicle goup of at least one of the plurality of vehicles respectively to the plurality of available parking spaces.

5. A method of claim 4, wherein the at least one user interface includes at least one mapping interface representing the at least one navigation destination, the method further comprising:
causing a presentation of one or more representations of the at least one of the plurality of vehicles on the at least one user interface in relation to the at least one destination, the at least one set of the plurality of available parking spaces, or a combination thereof; and determining one or more interactions with the user interface, to determine the at least one manual assignment.

6. A method of claim 5, further comprising:
causing a triggering of the presentation of the at least one user interface based on a determination that at least one vehicle of the plurality of vehicles has parked.

7. A method according to any of claims 1-4, further comprising:
determining that the plurality of vehicles in the at least one vehicle group are to arrive at the least one navigation destination at different respective times of arrival, wherein the at least one set of the plurality of available parking spaces are determined based on anticipated parking space availability information predicted for the different respective times of arrival.

8. A method according to any of claims 1-4 and 7, further comprising:
determining that at least one of the plurality of available parking spaces is occupied by at least one autonomous vehicle; and
causing a generation of at least one request to the at least one autonomous vehicle to leave the at least one of the plurality of available parking spaces.

9. A method according to any of claims 1-4 and 7-8, further comprising:
determining that the at least one set of the plurality of available parking spaces cannot accommodate the at least one vehicle group at the at least one navigation destination; and causing a querying for at least one other navigation destination based on the parking criteria information, the at least one vehicle group, or a combination thereof.

10. A method according to any of claims 1-4 and 7-9, wherein the at least one set of the plurality of available parking spaces are further based on parking space sensor information, crowd-sourced information, historical information, or a combination thereof.

11. An apparatus comprising:
at least one processor; and
at least one memory including computer program code for one or more programs, the at least one memory and the computer program code configured to, with the at least one processor, cause the apparatus to perform at least the following,
determine parking criteria information associated with at least one vehicle group comprising a plurality of vehicles, wherein the at least one vehicle group is associated with at least one common navigation destination; and processing and/or facilitating a processing of the parking criteria information to determine at least one set of a plurality of available parking spaces available at the at least one common navigation destination,
wherein the parking criteria information includes at least one of (i) a proximity of the plurality of available parking spaces to each other, and (ii) a proximity of the at least one set of the plurality of available parking spaces to the at least one navigation destination.

12. An apparatus according to claim 11, wherein the apparatus is a mobile phone further comprising:
user interface circuitry and user interface software configured to facilitate user control of at least some functions of the mobile phone through use of a display and configured to respond to user input; and
a display and display circuitry configured to display at least a portion of a user interface of the mobile phone, the display and display circuitry configured to facilitate user control of at least some functions of the mobile phone.

13. A computer program product including one or more sequences of one or more instructions which, when executed by one or more processors, cause an apparatus to at least perform a method of any of claims 1-10.

## Patentansprüche

1. Verfahren, das Folgendes umfasst:
Bestimmen von Parkkriterien-Informationen, die mindestens einer Fahrzeuggruppe zugeordnet sind, die mehrere Fahrzeuge umfasst, wobei die mindestens eine Fahrzeuggruppe mindestens einem gemeinsamen Navigationsziel zugeordnet ist; und Verarbeiten und/oder Ermöglichen eines Verarbeitens der Parkkriterien-Informationen, um mindestens einen Satz von mehreren verfügbaren Parkplätzen zu bestimmen, die an dem mindestens einen gemeinsamen Navigationsziel verfügbar sind,
wobei die Parkkriterien-Informationen mindestens eine (i) einer Nähe der mehreren verfügbaren Parkplätze zueinander und (ii) einer Nähe des mindestens einen Satzes der mehreren verfügbaren Parkplätze zu dem mindestens einen Navigationsziel aufweist.

2. Verfahren nach Anspruch 1, wobei die Parkkriterien-Informationen ferner mindestens eine von (a) Abmessungsinformationen, die den mehreren Fahrzeugen zugeordnet sind, (b) kontextabhängigen Informationen, die den mehreren Fahrzeugen, einem oder mehreren Fahrgästen in den mehreren Fahrzeugen oder einer Kombination davon zugeordnet sind, aufweist.

3. Verfahren nach einem der Ansprüche 1-2, das ferner Folgendes umfasst:
Verarbeiten und/oder Ermöglichen eines Verarbeitens der Parkkriterien-Informationen, um mindestens eine Empfehlung zum Zuweisen der mehreren Fahrzeuge jeweils zu den mehreren verfügbaren Parkplätzen zu bestimmen.

4. Verfahren nach einem der Ansprüche 1-3, das ferner Folgendes umfasst:
Veranlassen einer Präsentation von mindestens einer Benutzerschnittstelle für mindestens eine manuelle Zuweisung von mindestens einem Mitglied der Fahrzeuggruppe mindestens eines der mehreren Fahrzeuge jeweils zu den mehreren verfügbaren Parkplätzen.

5. Verfahren nach Anspruch 4, wobei die mindestens eine Benutzerschnittstelle mindestens eine Kartenschnittstelle aufweist, die das mindestens eine Navigationsziel darstellt, wobei das Verfahren ferner Folgendes umfasst:
Veranlassen einer Präsentation von einem oder mehreren Repräsentanten des mindestens einen der mehreren Fahrzeuge auf der mindestens einen Benutzerschnittstelle im Zusammenhang mit dem mindestens einen Ziel, dem mindestens einen Satz der mehreren verfügbaren Parkplätze oder einer Kombination davon und Bestimmen einer oder mehrerer Interaktionen mit der Benutzerschnittstelle, um die mindestens eine manuelle Zuweisung zu bestimmen.

6. Verfahren nach Anspruch 5, das ferner Folgendes umfasst:
Veranlassen eines Auslösens der Präsentation der mindestens einen Benutzerschnittstelle basierend auf einer Bestimmung, dass mindestens ein Fahrzeug der mehreren Fahrzeuge geparkt hat.

7. Verfahren nach einem der Ansprüche 1-4, das ferner Folgendes umfasst:
Bestimmen, dass die mehreren Fahrzeuge in der mindestens einen Fahrzeuggruppe an dem mindestens einen Navigationsziel zu unterschiedlichen entsprechenden Ankunftszeiten ankommen, wobei der mindestens eine Satz der mehreren verfügbaren Parkplätze basierend auf antizipierten Parkplatz-Verfügbarkeitsinformationen bestimmt ist, die für die unterschiedlichen entsprechenden Ankunftszeiten vorhergesagt sind.

8. Verfahren nach einem der Ansprüche 1-4 und 7, das ferner Folgendes umfasst:
Bestimmen, dass mindestens einer der mehreren verfügbaren Parkplätze von mindestens einem autonomen Fahrzeug besetzt ist, und
Veranlassen einer Erzeugung von mindestens einer Anfrage an das mindestens eine autonome Fahrzeug, den mindestens einen der mehreren verfügbaren Parkplätze zu verlassen.

9. Verfahren nach einem der Ansprüche 1-4 und 7-8, das ferner Folgendes umfasst:
Bestimmen, dass der mindestens eine Satz der mehreren verfügbaren Parkplätze die mindestens eine Fahrzeuggruppe an dem mindestens einen Navigationsziel nicht aufnehmen kann, und
Veranlassen einer Abfrage für das mindestens eine andere Navigationsziel basierend auf den Parkkriterien-Informationen, der mindestens einen Fahrzeuggruppe oder einer Kombination davon.

10. Verfahren nach einem der Ansprüche 1-4 und 7-9, wobei der mindestens eine Satz der mehreren verfügbaren Parkplätze ferner auf Parkplatz-Sensorinformationen, mengenbezogenen Informationen, vergangenen Informationen oder einer Kombination davon basiert.

11. Vorrichtung, die Folgendes umfasst:
mindestens einen Prozessor und
mindestens einen Speicher, der einen Rechnerprogrammcode für ein oder mehrere Programme aufweist, wobei der mindestens eine Speicher und der Rechnerprogrammcode konfiguriert sind, um mit dem mindestens einen Prozessor die Vorrichtung zu veranlassen, mindestens eines von Folgendem durchzuführen:
Bestimmen von Parkkriterien-Informationen, die mindestens einer Fahrzeuggruppe zugeordnet sind, die mehrere Fahrzeuge umfasst, wobei die mindestens eine Fahrzeuggruppe mindestens einem gemeinsamen Navigationsziel zugeordnet ist, und Verarbeiten und/oder Ermöglichen eines Verarbeitens der Parkkriterien-Informationen, um mindestens einen Satz mehrerer verfügbarer Parkplätze zu bestimmen, die an dem mindestens einen gemeinsamen Navigationsziel verfügbar sind,
wobei die Parkkriterien-Informationen mindestens eine (i) einer Nähe der mehreren verfügbaren Parkplätze zueinander und (ii) einer Nähe des mindestens einen Satzes der mehreren verfügbaren Parkplätze zu mindestens dem mindestens einen Navigationsziel aufweist.

12. Vorrichtung nach Anspruch 11, wobei die Vorrichtung ein Mobiltelefon ist, das ferner Folgendes umfasst:
Benutzerschnittstellenschaltung und Benutzerschnittstellensoftware, die konfiguriert sind, um eine Benutzersteuerung von mindestens ein paar Funktionen des Mobiltelefons durch Verwendung einer Anzeige zu ermöglichen, und die konfiguriert sind, um auf eine Benutzereingabe zu reagieren, und
eine Anzeige und Anzeigenschaltung, die konfiguriert sind, um mindestens einen Teil einer Benutzerschnittstelle des Mobiltelefons anzuzeigen, wobei die Anzeige und Anzeigenschaltung konfiguriert sind, um eine Benutzersteuerung von mindestens ein paar Funktionen des Mobiltelefons zu ermöglichen.

13. Computerprogrammprodukt, das eine oder mehrere Sequenzen einer oder mehrerer Anweisungen aufweist, die, wenn sie durch einen oder mehrere Prozessoren ausgeführt werden, eine Vorrichtung veranlassen, mindestens ein Verfahren nach einem der Ansprüche 1-10 durchzuführen.

## Revendications

1. Procédé comprenant les étapes consistant à :
déterminer des informations de critères de stationnement associées à au moins un groupe de véhicules comprenant une pluralité de véhicules, dans lequel ledit au moins un groupe de véhicules est associé à au moins une destination de navigation commune ; et
traiter et / ou faciliter un traitement des informations de critères de stationnement pour déterminer au moins un ensemble de places parmi une pluralité de places de stationnement disponibles disponibles à ladite au moins une destination de navigation commune,
dans lequel les informations de critères de stationnement comprennent au moins l'une des informations parmi (i) une proximité de la pluralité de places de stationnement disponibles l'une par rapport à l'autre, et (ii) une proximité dudit au moins un ensemble de places parmi la pluralité de places de stationnement disponibles à ladite au moins un destination de navigation.

2. Procédé selon la revendication 1, dans lequel les informations de critères de stationnement comprennent en outre au moins l'une des informations parmi (a) des informations de dimension associées à la pluralité de véhicules ; (b) des informations contextuelles associées à la pluralité de véhicules, à un ou à plusieurs passagers dans la pluralité de véhicules, ou une combinaison de celles-ci.

3. Procédé selon l'une quelconque des revendications 1 et 2, comprenant en outre l'étape consistant à :
traiter et / ou faciliter un traitement des informations de critères de stationnement pour déterminer au moins une recommandation pour affecter la pluralité de véhicules respectivement à la pluralité de places de stationnement disponibles.

4. Procédé selon l'une quelconque des revendications 1 à 3, comprenant en outre l'étape consistant à :
provoquer une présentation d'au moins une interface utilisateur pour au moins une affectation manuelle par au moins un membre du groupe de véhicules d'au moins un véhicule parmi la pluralité de véhicules respectivement à la pluralité de places de stationnement disponibles.

5. Procédé selon la revendication 4, dans lequel ladite au moins une interface utilisateur comprend au moins une interface de mise en correspondance représentant ladite au moins une destination de navigation, le procédé comprenant en outre les étapes consistant à :
provoquer une présentation d'une ou plusieurs représentations dudit au moins un véhicule parmi la pluralité de véhicules sur ladite au moins une interface utilisateur par rapport à ladite au moins une destination, ledit au moins un ensemble de places parmi la pluralité de places de stationnement disponibles, ou une combinaison celles-ci ; et déterminer une ou plusieurs interactions avec l'interface utilisateur, pour déterminer ladite au moins une affectation manuelle.

6. Procédé selon la revendication 5, comprenant en outre l'étape consistant à : provoquer un déclenchement de la présentation de ladite au moins une interface utilisateur sur la base de'une détermination du fait qu'au moins un véhicule parmi la pluralité de véhicules s'est garé.

7. Procédé selon l'une quelconque des revendications 1 à 4, comprenant en outre l'étape consistant à :
déterminer que la pluralité de véhicules dans ledit au moins un groupe de véhicules doit arriver à ladite au moins une destination de navigation à différents moments d'arrivée respectifs, dans lequel ledit au moins un ensemble de places parmi la pluralité de places de stationnement disponibles est déterminé en fonction d'informations de disponibilité de places de stationnement anticipées prévues pour les différentes heures d'arrivée respectives.

8. Procédé selon l'une quelconque des revendications 1 à 4 et 7, comprenant en outre les étapes consistant à :
déterminer qu'au moins l'une des places de stationnement disponibles est occupé par au moins un véhicule autonome ; et
provoquer une génération d'au moins une requête audit au moins un véhicule autonome pour quitter ladite au moins une place parmi la pluralité de places de parking disponibles.

9. Procédé selon l'une quelconque des revendications 1 à 4 et 7 à 8, comprenant en outre les étapes consistant à :
déterminer que ledit au moins un ensemble de places parmi la pluralité de places de stationnement disponibles ne peut pas accueillir ledit au moins un groupe de véhicules à ladite au moins une destination de navigation ; et
provoquer une interrogation pour au moins une autre destination de navigation sur la base des informations de critères de stationnement, dudit au moins un groupe de véhicules ou d'une combinaison de ceux-ci.

10. Procédé selon l'une quelconque des revendications 1 à 4 et 7 à 9, dans lequel ledit au moins un ensemble de places parmi la pluralité de places de stationnement disponibles est en outre basé sur des informations de capteurs de places de stationnement, des informations participatives, des informations d'historiques ou une combinaison celles-ci.

11. Appareil comprenant :
au moins un processeur ; et
au moins une mémoire comprenant un code de programme informatique pour un ou plusieurs programmes, ladite au moins une mémoire et le code de programme informatique étant configurés pour, avec ledit au moins un processeur, amener l'appareil à effectuer au moins les étapes suivantes consistant à,
déterminer des informations de critères de stationnement associées à au moins un groupe de véhicules comprenant une pluralité de véhicules, dans lequel ledit au moins un groupe de véhicules est associé à au moins une destination de navigation commune ; et traiter et / ou faciliter un traitement des informations de critères de stationnement pour déterminer au moins un ensemble de places parmi une pluralité de places de stationnement disponibles disponibles à ladite au moins une destination de navigation commune,
dans lequel les informations de critères de stationnement comprennent au moins l'une des informations parmi (i) une proximité de la pluralité de places de stationnement disponibles l'une par rapport à l'autre, et (ii) une proximité dudit au moins un ensemble de places parmi la pluralité de places de stationnement disponibles à ladite au moins une destination de navigation.

12. Appareil selon la revendication 11, dans lequel l'appareil est un téléphone mobile comprenant en outre :
un circuit d'interface utilisateur et un logiciel d'interface utilisateur configurés pour faciliter la commande par l'utilisateur d'au moins certaines fonctions du téléphone mobile grâce à l'utilisation d'un dispositif d'affichage et configurés pour répondre aux entrées de l'utilisateur ; et
un dispositif d'affichage et un circuit d'affichage configurés pour afficher au moins une partie d'une interface utilisateur du téléphone mobile, le dispositif d'affichage et le circuits d'affichage étant configurés pour faciliter la commande par l'utilisateur d'au moins certaines fonctions du téléphone mobile.

13. Produit de programme informatique comprenant une ou plusieurs séquences d'une ou plusieurs instructions qui, lorsqu'elles sont exécutées par un ou plusieurs processeurs, amènent un appareil à exécuter au moins un procédé selon l'une quelconque des revendications là 10.
